Europäisches Patentamt

(19) European Patent Office    (11) Publication number: **0 195 529**

Office européen des brevets    **B1**

(12) **EUROPEAN PATENT SPECIFICATION**

(45) Date of publication of patent specification: **27.12.90**    (51) Int. Cl.⁵: **G 01 B 3/10**

(21) Application number: **86301246.4**

(22) Date of filing: **21.02.86**

(54) Measuring tape.

(30) Priority: **21.02.85 GB 8504468**

(43) Date of publication of application:
**24.09.86 Bulletin 86/39**

(45) Publication of the grant of the patent:
**27.12.90 Bulletin 90/52**

(84) Designated Contracting States:
**DE FR**

(56) References cited:
**DE-A-3 246 263**
**US-A-3 802 083**
**US-A-4 015 337**
**US-A-4 296 554**

(73) Proprietor: **Samson, Ilan**
**13 Eton Avenue**
**London NW3 (GB)**

(72) Inventor: **Samson, Ilan**
**13 Eton Avenue**
**London NW3 (GB)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

This invention relates to a measuring tape of the kind having a case with a measuring tape bearing distance markings which is coilable within the case and extensible from the case through a mouth in the case walls.

It is known for tape measures to be provided with means for marking a measured position. Generally, prior proposals have tried to add a pencil or pen in some way which considerably enlarges the overall size of the tape measure, and/or provides projections which can snag if the tape measure is placed in a pocket, and/or fail to provide a mark at the mouth of the case.

US-A-3802083 shows a marking element carried by an attachment fitted to the side of a tape measure case. The mechanism which holds and retracts the marking element is beyond the end of the case, and marks at a position spaced from the mouth where the tape exits from the case.

DE-A-3246263 describes a tape measure having a marking element arranged to project through an edge wall of case, which wall also includes the mouth. The marking element projects through this wall close to a corner remote from the mouth of the case.

US-A-4296554 shows marking by means of a pencil which is guided in a clip on the case of a tape measure. The clip is also usable to attach the tape to a belt or clothing.

US-A-4015337 shows a tape measure with a marking element carried by a pivotally mounted arm positioned to mark at a position spaced from the mouth of the case.

It is an object of the present invention to provide a tape measure with marking means which can avoid greatly enlarging the case, and does not necessitate awkward projections from it.

It is also an object of the invention to provide a tape measure with marking means which are easy to use.

Further objects of the invention are economy in manufacture, and to make possible use of marking elements which are commercially available, so that they can be replaced readily and inexpensively.

A tape measure having a case (1, 31) with a measuring tape (2) bearing distance markings which is coilable within the case and extensible from the case through a mouth (3, 40) in the case walls, which case walls include a pair of side walls (32, 33) which extend in the direction of extension of the tape and transversely to the axis around which the tape is coilable, the case defining a guide aperture (22, 52) at the case periphery, the case further having an elongate marking element (20, 48), means (8, 46) to hold the marking element in a position adjacent or within the case, and an actuating element (8, 46, 64) mounted on the case and operable by hand to advance the marking element to cause the tip thereof to project from the said aperture, for marking by means of the said tip, which actuating element permits or causes retraction of the tip into the aperture (22, 52), characterised in that the guide aperture (22, 52) is located alongside the tape (2) at its passage through the mouth (3, 40) of the case, and in that the actuating element is exposed for access at a said side wall (32, 33) of the case such that manual operation thereof to advance the marking element (20, 48) is by means of a manual movement made alongside the said side wall of the case.

A plurality of marking elements may be provided, in which event one of them projects adjacent the mouth of the case.

It is desirable that the marking element should be retractable, either manually or preferably automatically. Advance of the element may be resisted by resilient means, to give automatic retraction. The actuating element preferably operates through a travel which is restricted so as to advance the marking element by less than 5mm.

The marking element may be a refill for a ball point or fibre tip pen, or may be a rigid scribing element. Preferred however is a pencil lead, such as is available for use in propelling pencils.

The case may have an elongate guide to receive the marking element, and the means to advance the element may then advance it longitudinally along the guide. Means to hold the marking element may also serve to advance it.

Preferably a second marking element projects adjacent an extremity of the case remote from its mouth. This can be useful if the tape measure is being used to measure close to an obstruction, preventing the tape being extended until the first marking element is in the desired position.

The case will generally have a pair of side walls joined by edge walls, around the periphery of the case, with the tape being coilable around an axis transverse to the side walls.

The marking element may be accommodated within the case, or within the thickness of a case wall. The marking element may be exposed on the exterior, or partially so, but preferably then lies closely against the exterior of the wall, e.g. so that it does not stand proud of any part of the exterior of the wall by more than five mm.

The marking element may extend alongside a side wall of the case, and generally parallel to that wall, either inside or outside the case.

A preferred characteristic may be defined as requiring that the marking element is held within the case, and/or within a wall of the case, and/or extends alongside the exterior of a case wall sufficiently closely thereto as to create no air gap between the marking element and the case wall.

Preferably the marking element is no more than five mm thick, notably it may be a pencil lead which is at most one or two mm thick.

Features of the invention enable use of slender marking elements, lacking rigidity and/or structural strength. By causing the marking element to project through a guide aperture, it is supported near its tip. Features of the invention also enable the basic size and shape of a tape measure case to be largely preserved. Consequently the tape measure can be as easy to carry, e.g. in a pocket in clothing, as existing tape measures lacking any marking element.

Most preferably the marking element, such as a pencil, pen, pin, stylus or the like, is retractable by means of a spring loading so that, at rest, the marking means is retracted automatically and is unobtrusive. In one form of the invention the marking element is held in a groove which is formed in an edge portion of a resilient body which travels in a guide on the exterior of a side wall of the case adjacent the mouth.

The guide aperture through which the marking element projects is preferably so located adjacent the mouth of the case that the marking point is in exact alignment with the edge of the mouth whereby a mark may be made exactly where the tape emerges.

Because of its accuracy a tape measure of the invention may be used for a variety of purposes including draughtsmanship. For this purpose the extremity of the tape may be provided with an upstanding indicator of the zero or other point. Measurements and marking may be made successively with a high degree of accuracy.

In order to explain the invention further, embodiments will now be described by way of example with reference to the accompanying diagrammatic drawings, in which:

Figure 1 is a perspective view of one embodiment of the invention;

Figure 2 is a transverse section taken on line II—II;

Figure 3 is an elevation of the spring body used in the embodiment of Figure 1;

Figure 4 is an enlarged cross-section taken on line IV—IV of Figure 3;

Figure 5 is a perspective view showing the marking element projecting;

Figure 6 is a side view of a second embodiment, sectioned on line VI—VI of Figure 7; and

Figure 7 is a section on line VII—VII of Figure 6.

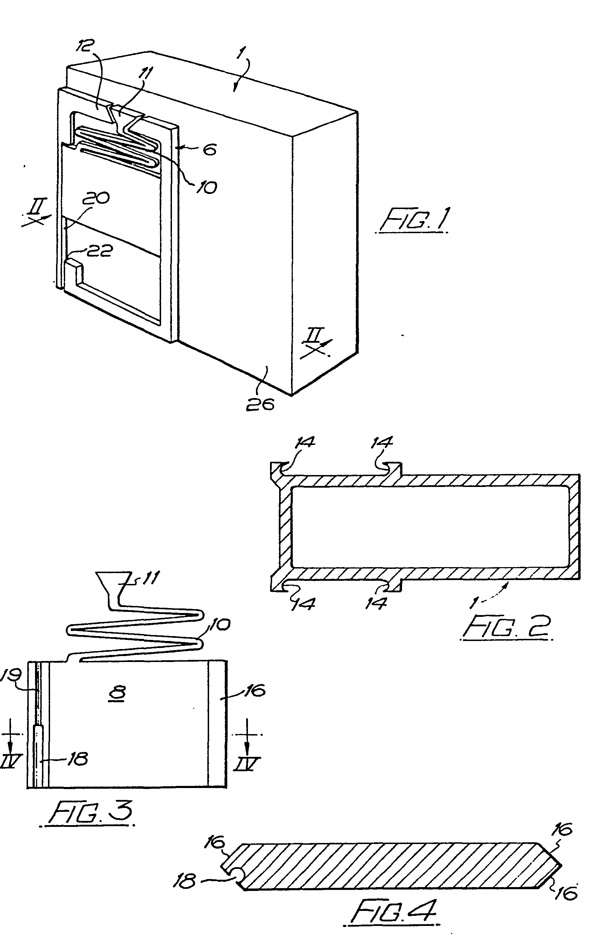

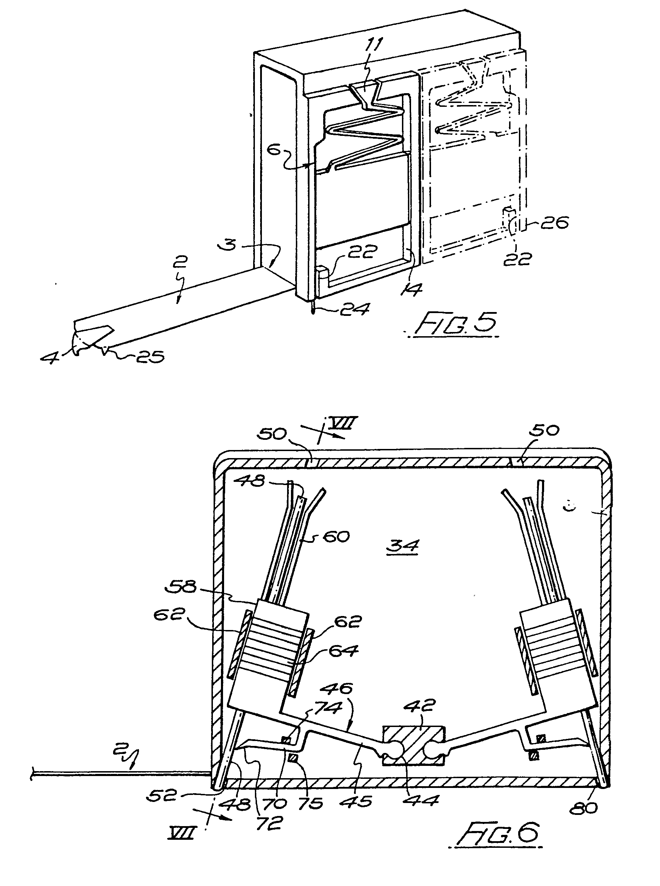

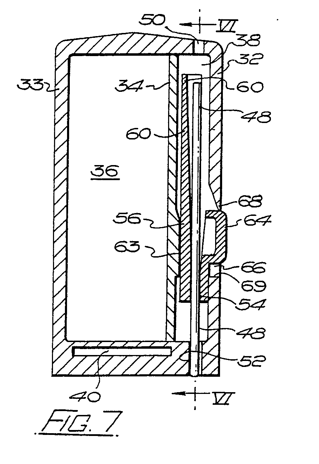

Referring first to Figures 1 to 5, the tape measure shown comprises a case 1 which is approximately a cuboid housing a coiled length of a tape 2 having distance markings, not shown. The case 1 has a mouth 3 through which the tape 2 can be drawn out for use. The tape 2 terminates, as is customary, at an end hook 4 which prevents it from being retracted too far.

Each side wall of the case incorporates — moulded integrally with it — a holder 6 with a generally rectangular outline within which slides a spring body shown in Figure 3. The spring body comprises a plate 8 which slides between the vertical sides of the holder, and a tension spring 10 which extends from the plate 8 to a dovetail 11 at its free end. The dovetail fits into a cut-out in the upper run 12 of the holder 6.

Each side of the holder 6 defines grooves 14 into which fit the edges of the plate 8. These edges are formed with inclined faces 16 to fit the grooves 14.

One edge of the plate 8 is formed with a groove 18, 19. The lower length 18 of this is dimensioned to receive a marking element, such as a pencil lead 20, or a pin. The upper length 19 of the bore is narrower, and a thinner pin or wire can be pushed down it to expel the pencil lead 20 or pin from the lower length, when required.

At the corner nearest the mouth 3 the holder 6 is shaped to define a guide aperture 22 (which may also be termed a socket) through which the marking element can extend.

Sliding the plate 8 in the holder 6 moves the marking element longitudinally, so that when the plate 8 is slid down against the action of spring 10, the marking element 20 extends through the guide aperture 22, and the tip 24 of the marking element projects, as shown in Fig. 5.

The plate 8, and dovetail 11 are preferably fast with the ends of the spring 10, so that the spring body constituted by these items is effectively one piece. It may be moulded or stamped in one piece from polyacetal or like material. At rest the spring retracts the plate 8 to the position shown in Fig. 1, and hence automatically retracts the marker element 20.

The free end of tape 2 may have a depending marker 25 as a zero reference point for measurement. Alternatively a hook 4 which is free to slide slightly (as is known per se) may be used.

In use the end of the tape is held, or hooked with hook 4, at a reference point. The tape is extended (e.g. by moving the case) until the case is at the desired position.

The user then moves the plate 8 down, with a finger or thumb, to project the tip of the marking element 20, and make a mark. The guide aperture 22 is arranged to be exactly aligned with the mouth of the case, so that the mark made will correspond to whatever distance is indicated where the mouth 3 extends across the tape 2.

It will be appreciated that in this embodiment the marking element 20 extends across the exterior of the side wall of the case, parallel and close to it. The plate 8 constitutes means to hold and to advance the marking element 20. The arrangement adds very little to the dimensions or shape of the case and enables use of a thin pencil lead as marking element. The fragile lead is protected by the parts of the case which hold and surround it, especially the guide aperture 22 which also promotes accurate marking by locating the tip of the marking element, avoiding parallax error or variation in orientation which might arise if the element was directly hand held.

The lead 20 is retracted automatically after use, so that it should not make unwanted marks or snag clothing.

The open side of the bore 18 enables the marking element to be gripped by a plate 8 formed of resilient material, because the bore can be dimensioned to be slightly expanded by the marking element. The open side also assists in releasing the plate 8, or entire spring body 8, 10, 11 from a mould or from a stamp press.

If desired a second spring body and holder, oppositely handed but otherwise identical, can be provided as shown in phantom in Figure 5. This enables marking at the corner 26 of the case, remote from the mouth 3. The dimensions may be arranged so that the second marking element is spaced from the mouth 3 by a distance which is a convenient round number such as 50mm. A user can mentally add this to the indicated distance.

Another possible modification is to provide a pencil lead as marking element on one side wall of the case, and scribing pin held by a similar spring body, on the other side wall of the case.

Figures 6 and 7 show a second embodiment in which the marker element is held within the case.

This tape measure has a case 31 which is also cuboidal, consisting of side walls 32, 33 with peripheral walls joining them. The case has an internal wall 34 parallel to the side walls, dividing the case into a compartment 36 in which a tape 2 coils around an axis extending between the walls 33, 34, and a second compartment 38.

The tape is held coiled in the compartment 36, with a conventional mechanism supported between the walls 33, 34. The tape issues through a mouth 40.

Within the compartment 38 a block 42 is provided, integral with wall 32. This block has a socket 44 into which is fitted one end of an arm 45 of a moulding 46 which serves as means to hold and advance a pencil lead 48. This lead is initially inserted through a hole 50 in the top of the case, and its lower end portion is received in a guide aperture 52 aligned with the mouth 40. It will be seen that the lead 48 lies alongside and parallel to the interior of wall 32. The arm 45 is shaped so that it abuts the mouth of socket 44, and is substantially prevented from pivoting.

The moulding 46 has a slider constituted by an outer portion 54 and an inner portion 56 which are hinged together through a living hinge along their edge 58. These parts are moulded roughly coplanar and then the inner portion 56 is folded round behind the outer portion 54, forming a channel through which the lead 48 passes. A guide channel 60 for the lead extends up from the inner portion 56.

The slider 54, 56 is located between guides 62 which are integral with one or other of the walls 32, 34. The portion 54 includes a button 64 which projects through an aperture 66 in the wall 32. This arrangement permits the slider portions 54, 56 to slide as one unit along the longitudinal direction of the pencil lead 48, over a short travel. The sliding resiliently bends the arm 45, which therefore exerts a restoring force on the slider 54, 56. This arm is arranged to hold the slider 54, 56 up so that the button 64 normally abuts or lies close to the upper boundary 68 of the aperture 66.

The slider portions 54, 56 are normally far enough apart to allow the lead 48 to pass between them. Pressure on the button 64 pushes the portion 54 towards the portion 56, which itself is supported by a thickening 63 of the wall 34. The result is that the portions 54, 56 grip the lead 48 but only as long as pressure is applied to the button 64.

A thin leg 70 extends from the arm 45 to a pointed tip 72 as shown. This presses on the lead 48 at all times.

Its tip 72 is arranged to apply slight pressure to the lead so that the lead 48 cannot fall freely past the tip 72, but can be pushed past it. Movement of the leg 70 is blocked by stops 74, 75 which project from one or other of the case walls 32, 34.

The rest condition is illustrated in Figures 6 and 7. If the button 64 is then pushed down towards the lower boundary 69 of the aperture 66, the finger pressure on the button 64 causes the portions 54, 56 to grip the lead, and the lead is advanced longitudinally until the button 64 reaches the boundary 69. The lead 48 advances past the tip 72, which then holds the lead 48 in the position it reaches. When the button 64 is released, the resilience of arm 45 returns portions 54, 56 without the lead 48.

The lead is initially slid in through the hole 50 and as far as possible down guide channel 60. The lead is then advanced by repeatedly pushing the button 64 down and releasing the button, until the tip of the lead appears from the guide aperture 52. After this, whenever it is desired to advance the lead, the button 64 is pushed down. The travel of the button 64 is restricted by the spacing of the boundaries 68, 69. These are set to restrict the travel to 2mm. Consequently it is not possible to project the tip of the lead by more than 2mm with a single operation of the button 64 which reduces the risk of projecting too much lead, and breaking it.

The lead will not retract automatically, but can be pushed in by hand when finished with.

An exactly similar lead and means to hold and advance it is provided in the other half of the compartment 38, for the lead to project through a guide aperture 80 at the corner of the case opposite to the mouth 40.

A modification enables automatic retraction. The stop 75 is positioned 2mm below the rest position of the leg 70. The boundary 69 of the aperture 66 is positioned to allow a longer travel, of say 4mm.

When the button 64 is depressed, the leg 70 moves with the slider portions 54, 56 during the first 2mm. If the button is released, the leg 70 moves up again with the slider 54, 56 and retracts the lead. After 2mm the leg bears on the stop 75. More force is needed to depress the button further, until the button 64 abuts boundary 69. During this final travel the lead 48 is advanced past the leg, and this advance of the lead is not retracted when the button 64 is released.

Provision of three parallel walls 32, 33, 34 can be accomplished in various ways. The case 31 could be made of three moulded parts assembled with screws passing through all three, transverse to the walls 32, 33, 34. The side wall 32 could snap fit onto a moulding providing the wall 34, or the internal wall 34 could snap fit into a moulding providing the wall 32.

## Claims

1. A tape measure having a case (1, 31) with a measuring tape (2) bearing distance markings which is coilable within the case and extensible from the case through a mouth (3, 40) in the case walls, which case walls include a pair of side walls (32, 33) which extend in the direction of extension of the tape and transversely to the axis around which the tape is coilable, the case defining a guide aperture (22, 52) at the case periphery, the case further having an elongate marking element (20, 48), means (8, 46) to hold the marking element in a position adjacent or within the case, and an actuating element (8, 46, 64) mounted on the case and operable by hand to advance the marking element to cause the tip thereof to project from the said aperture, for marking by means of the said tip, which actuating element permits or causes retraction of the tip into the aperture (22, 52), characterised in that the guide aperture (22, 52) is located alongside the tape (2) at its passage through the mouth (3, 40) of the case, and in that the actuating element is exposed for access at a said side wall (32, 33) of the case such that manual operation thereof to advance the marking element (20, 48) is by means of a manual movement made alongside the said side wall of the case.

2. A tape measure according to claim 1 wherein the marking element is held either exteriorly of and substantially parallel to a side wall of said case or is held at least partially within said case.

3. A tape measure according to either one of the preceding claims wherein operation of the actuating element causes it to travel substantially linearly against resilient bias.

4. A tape measure according to any one of the preceding claims able to accommodate a marking element with only the tip of the marking element projecting longitudinally beyond the periphery of the case.

5. A tape measure according to any one of the preceding claims wherein the marking element is accommodated parallel to a case wall, and can be so accommodated with not more than the said tip projecting longitudinally past the periphery of that wall.

6. A tape measure according to any one of the preceding claims wherein the marking element is not more than 5mm thick.

7. A tape measure according to claim 6 wherein the marking element is a pencil lead (20, 48).

8. A tape measure according to any one of the preceding claims having a second marking element, means to hold this marking element, and means to advance the second marking element to cause a tip thereof to project at a point (26, 80) remote from the mouth of the case, for marking by means of the said tip of the second marking element.

9. A tape measure according to any one of the preceding claims wherein the actuating element (46, 64) operates through a travel which is restricted, so as to advance the marking element by less than 5mm.

10. A tape measure according to any one of the preceding claims wherein the means to hold the marking element also serves as the actuating element.

11. A tape measure according to any one of the preceding claims wherein the actuating element (46, 64) comprises a pair of parts (54, 56), between which the marking element (48) extends, manual pressure on said actuating element pressing said parts thereof together so as to grip the marking element, the said parts disengaging from the marking element sufficiently to permit sliding movement of the marking element between the said parts when manual pressure is released from the actuating element.

## Patentansprüche

1. Bandmaß, das ein Gehäuse (1, 31) aufweist, mit einem Entfernungsmarkierungen tragenden Maßband (2), das in dem Gehäuse aufwickelbar und durch eine Mündung (3, 40) in den Gehäusewänden aus dem Gehäuse herausziehbar ist, wobei die Gehäusewände zwei Seitenwände (32, 33) umfassen, die sich in Längsrichtung des Bandes und quer zu der Achse, um die das Band aufwickelbar ist, erstrecken, wobei das Gehäuse am Gehäuseumfang eine Führungsöffnung (22, 52) begrenzt, wobei das Gehäuse ferner ein längliches Markierungselement (20, 48), Mittel (8, 46) zum Halten des Markierungselementes in einer Stellung nahe oder in dem Gehäuse und ein Betätigungselement (8, 46, 64) aufweist, das an dem Gehäuse gelagert und von Hand betätigbar ist, um das Markierungselement vorzuschieben, damit dessen Spitze aus dieser Öffnung vorsteht, um mit dieser Spitze eine Markierung vorzunehmen, wobei das Betätigungselement ein Zurückziehen der Spitze in die Öffnung (22, 52) ermöglicht oder bewirkt, dadurch gekennzeichnet, daß die Führungsöffnung (22, 52) längs des Bandes (2) an dessen Durchtritt durch die Mündung (3, 40) des Gehäuses angeordnet ist und daß das Betätigungselement an einer Seitenwand (32, 33) des Gehäuses frei zugänglich ist, so daß die manuelle Betätigung desselben zum Vorschieben des Markierungselements (20, 48) durch eine manuelle Bewegung längs dieser Seitenwand des Gehäuses durchgeführt wird.

2. Bandmaß nach Anspruch 1, wobei das Markierungselement entweder außerhalb und im wesentlichen parallel zu einer Seitenwand des Gehäuses oder zumindest teilweise innerhalb des Gehäuses gehalten ist.

3. Bandmaß nach einem der vorhergehenden Ansprüche, wobei die Betätigung des Betätigungselements bewirkt, daß dieses gegen eine Federkraft im wesentlichen geradlinig bewegt wird.

4. Bandmaß nach einem der vorhergehenden Ansprüche, das ein Markierungselement aufnehmen kann, wobei nur die Spitze des Markierungselementes in Längsrichtung über den Umfang des Gehäuses vorsteht.

5. Bandmaß nach einem der vorhergehenden Ansprüche, wobei das Markierungselement parallel zu einer Gehäusewand untergebracht ist und so untergebracht werden kann, daß nicht mehr als die Spitze in Längsrichtung über den Umfang dieser Wand vorsteht.

6. Bandmaß nach einem der vorhergehenden Ansprüche, wobei das Markierungselement nicht mehr als 5mm dick ist.

7. Bandmaß nach Anspruch 6, wobei das Markierungselement eine Bleistiftmine (20, 48) ist.

8. Bandmaß nach einem der vorhergehenden Ansprüche, das ein zweites Markierungselement, Mittel zum Halten dieses Markierungselements und Mittel zum Vorschieben des zweiten Markierungselements aufweist, damit eine Spitze desselben an einer von der Mündung des Gehäuses entfernten Stelle (26, 80) vorsteht, um mit dieser Spitze des zweiten Markierungselements eine Markierung vorzunehmen.

9. Bandmaß nach einem der vorhergehenden Ansprüche, wobei das Betätigungselement (46, 64) in einer begrenzten Bewegung wirksam ist, um das Markierungselement um weniger als 5mm vorzuschieben.

10. Bandmaß nach einem der vorhergehenden Ansprüche, wobei die Mittel zum Festhalten des Markierungselements zugleich als Betätigungselement wirken.

11. Bandmaß nach einem der vorhergehenden Ansprüche, wobei das Betätigungselement (46, 64) zwei Teile (54, 56) umfaßt, zwischen denen sich das Markierungselement (48) erstreckt, wobei eine von Hand auf dieses Betätigungselement ausgeübte Druckkraft diese Teile zusammendrückt, um das Markierungselement zu erfassen, und wobei diese Teile von dem Markierungselement hinreichend freikommen, um eine Gleitbewegung des Markierungselements zwischen diesen Teilen zu ermöglichen, wenn die von Hand auf das Betätigungselement ausgeübte Druckkraft beendet wird.

**Revendications**

1. Mètre à ruban comportant un étui (1, 31) avec un ruban de mesure (2) supportant des marquages de distance qui est enroulable à l'intérieur de l'étui et extensible à partir de l'étui à travers une ouverture (3, 40) dans les parois de l'étui, lesquelles parois d'étui incluent une paire de parois latérales (32, 33) qui s'étendent dans la direction d'extension du ruban et transversalement à l'axe autour duquel le ruban est enroulable, l'étui définissant une ouverture de guidage (22, 52) à la périphérie de l'étui, l'étui comportant en outre un élément de marquage allongé (20, 48), des moyens (8, 46) pour maintenir l'élément de marquage dans une position au voisinage ou à l'intérieur de l'étui, et un élément d'actionnement (8, 46, 64) monté sur l'étui et actionnable à la main pour faire avancer l'élément de marquage afin de provoquer la projection de sa pointe à partir de ladite ouverture, pour marquer au moyen de cette dite pointe, lequel élément d'actionnement permet ou provoque la rétraction de la pointe dans l'ouverture (22, 52), caractérisé en ce que l'ouverture de guidage (22, 52) est localisée à côté du ruban (2) à son passage à travers l'ouverture (3, 40) de l'étui, et en ce que l'élément d'actionnement est placé pour accéder à une dite paroi latérale (32, 33) de l'étui de telle façon qu'une opération manuelle de celle-ci pour faire avancer l'élément de marquage (20, 48) soit effectuée au moyen d'un mouvement manuel le long de ladite paroi latérale de l'étui.

2. Mètre à ruban selon la revendication 1 dans lequel l'élément de marquage est maintenu soit extérieurement de, et sensiblement parallèlement à une paroi latérale dudit étui ou soit maintenu au moins partiellement à l'intérieur de ce dit étui.

3. Mètre à ruban selon l'une quelconque des revendications précédentes dans lequel la mise en service de l'élément d'actionnement provoque le déplacement de celui-ci sensiblement linéairement contre l'influence élastique.

4. Mètre à ruban selon l'une quelconque des revendications précédentes capable de loger un élément de marquage avec seulement la pointe de l'élément de marquage se projetant longitudinalement au delà de la périphérie de l'étui.

5. Mètre à ruban selon l'une quelconque des revendications précédentes dans lequel l'élément de marquage est logé parallèlement à une paroi de l'étui, et peut être logé de telle façon que pas plus que ladite pointe ne se projette longitudinalement passé la périphérie de cette paroi.

6. Mètre à ruban selon l'une quelconque des revendications précédentes dans lequel l'élément de marquage n'ait pas plus de 5mm d'épaisseur.

7. Mètre à ruban selon la revendication 6 dans lequel l'élément de marquage est un crayon à mine (20, 48).

8. Mètre à ruban selon l'une quelconque des revendications précédentes comportant un second élément de marquage, un moyen pour maintenir cet élément de marquage, et un moyen pour faire avancer le second élément de marquage pour provoquer la projection d'une pointe de celui-ci en un point (26, 80) éloigné de l'ouverture de l'étui, pour marquer au moyen de ladite pointe du second élément de marquage.

9. Mètre à ruban selon l'une quelconque des revendications précédentes dans lequel l'élément d'actionnement (46, 64) fonctionne à travers une course qui est restreinte, de façon à faire avancer l'élément de marquage de moins de 5 mm.

10. Mètre à ruban selon l'une quelconque des revendications précédentes dans lequel le moyen pour maintenir l'élément de marquage sert également d'élément d'actionnement.

11. Mètre à ruban selon l'une quelconque des revendications précédentes dans lequel l'élément d'actionnement (46, 64) comprend une paire de parties (54, 56), entre lesquelles l'élément de marquage (48) s'étend, la pression manuelle sur ledit élément d'actionnement pressant lesdites parties de celui-ci ensemble de façon à serrer l'élément de marquage, lesdites parties se désengageant de l'élément de marquage de façon suffisante pour permettre un mouvement de glissement de l'élément de marquage entre lesdites parties lorsque la pression manuelle est relâchée à partir de l'élément d'actionnement.

FIG.1

FIG. 2

FIG.3

FIG.4

*FIG.5*

*FIG.6*

EP 0 195 529 B1

FIG. 7

3